# EUROPEAN PATENT APPLICATION

(11) **EP 4 144 606 A1**
(43) Date of publication of application: **08.03.2023**
(21) Application number: 22188864.7
(22) Date of filing: 04.08.2022
(51) Int. Cl.: B60W 30/186, B60W 30/16, B60W 30/18, B60W 30/17, F16D 48/00, B60W 10/02

(54) **DRIVING CONTROL APPARATUS FOR VEHICLE**

(30) Priority: 07.09.2021 JP 2021145504
(71) Applicant: Suzuki Motor Corporation, Hamamatsu-shi, Shizuoka 432-8611 (JP)
(72) Inventor: EBATA, Tatsuro, HAMAMATSU-SHI, 432-8611 (JP); WATANABE, Taku, HAMAMATSU-SHI, 432-8611 (JP)
(74) Representative: Plasseraud IP

(57) **Abstract**

[Problem to be Solved]

To provide a driving control apparatus for a vehicle that is advantageous in suppressing heat generation and wear of a clutch when an AMT vehicle performs extremely low-speed following cruise.

[Solution]

A driving control apparatus (10) for a vehicle, the vehicle including a clutch (3) for transmitting an output of an engine to a transmission mechanism (4), an AMT controller (40) for controlling a gearshift actuator and a clutch actuator according to a vehicle speed and an engine rotation number to perform a gear stage shifting operation of the transmission mechanism, and an engine controller (20) for controlling the engine according to an acceleration/deceleration command, and the driving control apparatus having a function for issuing the acceleration/deceleration command to perform a following cruise while maintaining a set intervehicle time to a vehicle ahead in a case in which the vehicle ahead traveling below a set vehicle speed is present in the vehicle's driving lane, when a following cruise to a vehicle ahead traveling at a speed below a minimum vehicle speed (Va) at which the vehicle can travel with the clutch engaged is performed, the driving control apparatus is configured to perform control to intermittently disengage the clutch at a predetermined cycle (Ta).

## Description

### [Technical Field]

The present invention relates to driving control apparatuses for vehicles, and more particularly, relates to a driving control apparatus for a vehicle equipped with an AMT-type automatic transmission.

### [Background Art]

An AMT (Automated Manual Transmission)-type automatic transmission equipped with a clutch for transmitting an output of an engine to a transmission mechanism (gearbox) and that automatically performs a gearshift operation and a clutch operation is known (see, for example, Patent Document 1). Such an automatic transmission has advantages of high power transmission efficiency and excellent fuel efficiency.

On the other hand, ACC (Adaptive Cruise Control) has been put into practical use; the ACC performs constant speed cruise at a set vehicle speed when there is no vehicle ahead in front in a vehicle's driving lane, and performs following cruise to a vehicle ahead by maintaining a set inter-vehicle time when the vehicle ahead traveling below the set vehicle speed is present in front in the vehicle's driving lane; the ACC has been extended to all vehicle speed ranges-enabled ACC including following cruise to a vehicle ahead traveling at a low speed due to congestion or the like, and deceleration stop and restart.

### [Citation List]

### [Patent Document]

[Patent Document 1] JP 6245109 B2

### [Summary of Invention]

### [Problem to be Solved by the Invention]

In a vehicle equipped with the AMT-type automatic transmission, there is a minimum vehicle speed at which the vehicle can travel in an engaged state of the clutch. Therefore, it was considered to keep the clutch in a half-clutch state without fully engaging when the vehicle performs following cruise to a vehicle ahead traveling at an extremely low speed below the minimum vehicle speed. However, if the half-clutch state continues, there is a concern about heat generation and wear of the clutch.

The present invention has been made in view of the above-described actual situation, and an object is to provide a driving control apparatus for a vehicle that is advantageous in suppressing heat generation and wear of a clutch when an AMT vehicle performs extremely low speed following cruise.

### [Means for Solving the Problem]

In order to solve the above-described problems, the present invention is
a driving control apparatus for a vehicle, the vehicle including:
a clutch for transmitting an output of an engine to a transmission mechanism;
a clutch actuator for engaging and disengaging the clutch;
a gearshift actuator for shifting gear stages of the transmission mechanism;
an AMT controller for controlling the gearshift actuator and the clutch actuator according to a vehicle speed and an engine rotation number to perform a gear stage shifting operation of the transmission mechanism; and
an engine controller for controlling the engine according to an
   acceleration/deceleration command,
the driving control apparatus having a function for issuing the
   acceleration/deceleration command to perform a following cruise while maintaining a set inter-vehicle time to a vehicle ahead in a case in which the vehicle ahead traveling below a set vehicle speed is present in the vehicle's driving lane,
characterized in that, when a following cruise to a vehicle ahead traveling at a speed below a minimum vehicle speed at which the vehicle can travel with the clutch engaged is performed, the driving control apparatus is configured to perform control to intermittently disengage the clutch.

### [Advantageous Effects of Invention]

As described above, the driving control apparatus for a vehicle according to the present invention is configured to perform control to intermittently disengage the clutch at a predetermined cycle when following cruise to a vehicle ahead traveling at a speed below the minimum vehicle speed at which the vehicle can travel in the engaged state of the clutch is performed; there are therefore advantages in that continuation of the half-clutch state is avoided, and extremely low speed cruise of the AMT vehicle can be performed while suppressing the heat generation and wear of the clutch.

### [Brief Description of Drawings]

[Figure 1] Figure 1 is a block diagram showing a driving control system for a vehicle.
[Figure 2] Figure 2 is a time-chart showing clutch control according to a first embodiment of the present invention.
[Figure 3] Figure 3 is a time-chart showing clutch control according to a second embodiment of the present invention.
[Figure 4] Figure 4 is a flowchart showing driving control according to the embodiments of the preset invention.

### [Mode for Carrying Out the Invention]

Hereinafter, embodiments of the present invention will be described in detail with reference to the drawings.

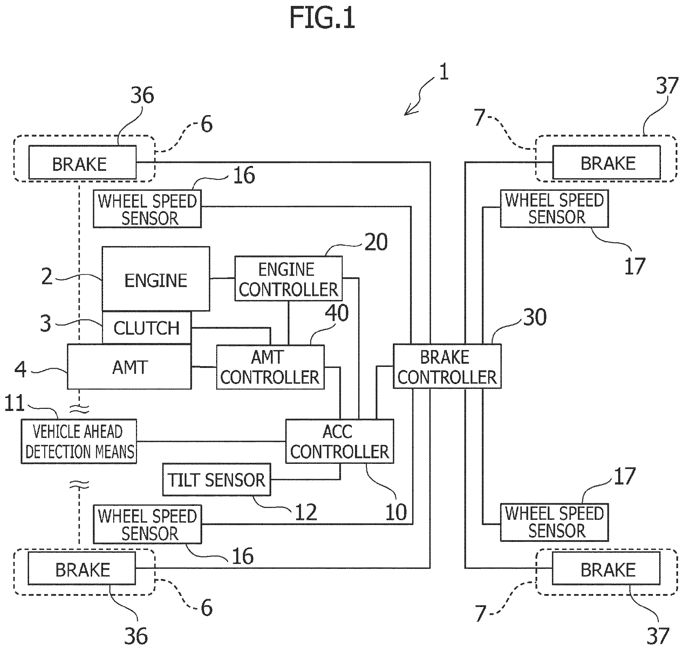

In Figure 1, a vehicle 1 is equipped with an internal combustion engine 2 and an automatic transmission 4 via a clutch 3 in a torque transmission path from the engine 2 to drive wheels (6).

The clutch 3 includes a clutch actuator (not shown) for performing an engagement/disengagement operation of itself; an engagement rate and engagement speed/disengagement speed of the clutch 3 can be controlled by controlling an operating stroke and operating speed of the clutch actuator.

For example, the clutch 3 includes a clutch disc slidably and non-rotatably spline-engaged with an input shaft of the automatic transmission 4 in an axial direction, and a clutch spring (diaphragm spring) for urging the clutch disc via a pressure plate; in a state in which the clutch actuator is not operating, the clutch disc is pressed against a flywheel connected to a crankshaft of the engine 2 by the urging of the clutch spring, and power of the engine 2 can be transmitted from the crankshaft to the automatic transmission 4.

When a release bearing is pressed via a clutch lever according to a stroke caused by an operation of the clutch actuator, the clutch disc separates from the flywheel against the urging of the clutch spring, and the clutch 3 shuts off power transmission of the engine 2. The clutch 3 can be put in a half-clutch state in which the power of the engine 2 is partially transmitted according to a contact pressure (engagement rate) given by the operating stroke of the clutch actuator.

The engagement speed and disengagement speed of the clutch 3 can be controlled by controlling the operating speed of the clutch actuator. For example, when a hydraulic actuator is used as the clutch actuator, by controlling a flow rate of hydraulic oil supplied to the hydraulic actuator, the operating speed of the hydraulic actuator can be controlled, and by holding the hydraulic pressure at any stroke of the hydraulic actuator, the engagement rate given by the stroke can be controlled.

The automatic transmission 4 is formed as an AMT-type automatic transmission including an MT-type transmission mechanism, for example, a parallel gear-type transmission mechanism equipped with constantly meshing synchromesh, and a gearshift actuator for performing a gear stage operation thereof, and includes an AMT controller 40 for performing a gearshift operation according to a driving condition of the vehicle 1.

The gearshift actuator includes a select actuator for switching a P/R/N/D range and switching a high-speed stage/low-speed stage according to an operation position of a select lever (not shown), and a shift actuator for performing a shifting operation, and performs a gearshift operation composed of clutch disengagement, gear stage shift, and clutch engagement in conjunction with the clutch actuator. As the select and shift actuators, hydraulic actuators are used; components such as electric pumps and hydraulic circuits that supply hydraulic pressure to the select, shift, and clutch actuators, accumulators, and solenoid valves are unitized and mounted.

The vehicle 1 includes an engine controller 20 for controlling an output of the engine 2 according to a throttle opening (torque request) given by an accelerator pedal operation (not shown) and an acceleration/deceleration command of an ACC controller 10 described later. The AMT controller 40 performs engine control linked to a clutch disengagement/engagement operation in the above gearshift operation by cooperative control with the engine controller 20.

For example, in a case in which the D range is selected, the AMT controller 40 performs a gear stage shift (shift-up/shift-down) when it is determined that the gear stage shift (shift-up/shift-down) is required due to an acceleration request/deceleration request or a change in a road surface inclination during traveling in a gear stage determined from driving conditions such as vehicle speed, engine rotation number, and torque (running resistance); drive torque is transmitted to the automatic transmission 4 according to the engagement rate of the clutch 3; when a series of gearshift operation ends, operation returns to the engine control by the engine controller 20.

The vehicle 1 is equipped with a brake system that includes a brake controller 30 and brake actuators (hydraulic actuators) (not shown) that can separately control braking forces of brakes 36 of left and right front wheels 6 and brakes 37 of left and right rear wheels 7 according to a brake pedal operation (not shown) or the deceleration command of the ACC controller 10 described later, wheel speed sensors 16 for the left and right front wheels 6, and wheel speed sensors 17 for the left and right rear wheels 7, and that forms an ABS/vehicle behavior stabilization apparatus.

The vehicle 1 having the basic configuration as described above includes ahead vehicle detection means 11 forming the ACC system together with the ACC controller 10. What can be used as the vehicle ahead detection means 11 are one or more detection means, such as millimeter wave radar, monocular camera, stereo camera, and LIDAR, that have functions for detecting presence of a vehicle ahead or an object (obstacle or structure) in front of the vehicle, and can measure a relative distance (relative inter-vehicle time) between the vehicle ahead or obstacle and the vehicle.

The ACC controller 10 is configured to perform all vehicle speed ranges-enabled adaptive cruise control (constant speed cruise/following cruise control/deceleration stop and restart control) by issuing an acceleration/deceleration command to the engine controller 20 and the brake controller 30 instead of a driver's accelerator/brake operation on the basis of detection information of the vehicle ahead detection means 11 and a vehicle speed calculated from detection values of the wheel speed sensors 16 and 17.

That is, the brake controller 30 (brake controller) that has received the deceleration command from the ACC controller 10 controls the vehicle speed by issuing brake requests (hydraulic pressure requests) to the brake actuators and controlling braking forces of the brakes 36 and 37. The engine controller 20 that has received the acceleration/deceleration command from the ACC controller 10 controls the vehicle speed by controlling torque of the engine 2 by issuing a torque request to the engine 2 and controlling an actuator output (throttle opening).

By the above control of the ACC controller 10, the vehicle 1 performs constant speed cruise by maintaining a set vehicle speed when there is no vehicle ahead, and when catching up with a vehicle ahead, performs following cruise to the vehicle ahead while maintaining an inter-vehicle distance corresponding to a predetermined inter-vehicle time (time gap = inter-vehicle distance/speed of vehicle) in accordance with the speed of the vehicle ahead. Furthermore, when the vehicle ahead decelerates and stops during the following cruise or the vehicle 1 catches up with the vehicle ahead that has decelerated and stopped, the vehicle 1 decelerates and stops while securing the predetermined inter-vehicle distance; when the vehicle ahead starts within a predetermined time, the vehicle 1 restarts in accordance with it and continues the following cruise.

The above-described engine controller 20, AMT controller 40, brake controller 30, and ACC controller 10 are each constituted by a microcomputer (MCU) including a ROM for storing control programs, setting data, and the like, a RAM for temporarily storing arithmetic processing results, a CPU for performing arithmetic processing, and a communication interface (I/F) and the like, and are communicatively connected with each other, together with a sensor group including the vehicle ahead detection means 11 and a tilt sensor 12, via an on-vehicle network (such as a CAN).

### ACC Extremely Low Speed Following Control

As already described, the vehicle 1 equipped with the AMT-type automatic transmission 4 has a minimum vehicle speed at which the vehicle can travel in the engaged state of the clutch 3. That is, the minimum vehicle speed at which the vehicle can travel at a minimum engine rotation number that does not cause the engine to stall in a first speed that maximizes a speed reduction ratio is 7-9 km/h, although it depends on road surface inclination and load weight. Even in the AMT vehicle, pseudo-creep cruise can be performed by maintaining the half-clutch state without fully engaging the clutch, but continuous creep cruise is not preferable from a viewpoint of the heat generation and wear of the clutch.

On the other hand, AT vehicles other than the AMT type and vehicles capable of EV cruise may travel at extremely low speed below the above minimum vehicle speed. Therefore, the driving control apparatus according to the present invention is configured to shift to extremely low speed following control described below, when performing ACC following cruise to a vehicle ahead traveling at an extremely low speed below the minimum vehicle speed due to traffic congestion or the like.

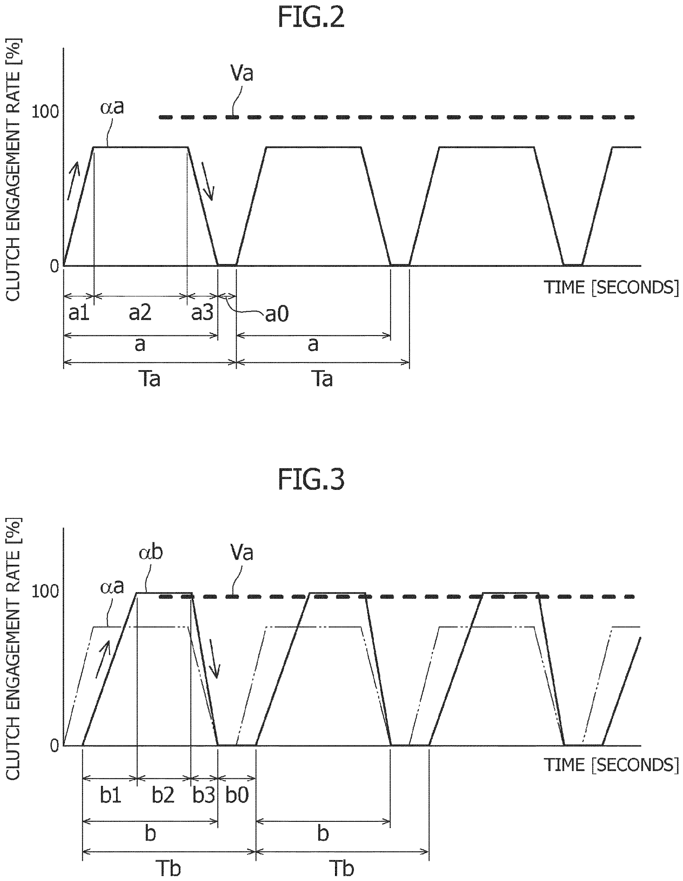

That is, in a first embodiment shown in Figure 2, low speed cruise below a minimum vehicle speed Va in the clutch engaged state is achieved by performing control to intermittently disengage the clutch 3 at a predetermined cycle. In the first embodiment, by control to repeat a half-clutch state during which the clutch is in a half-clutch region in which a clutch engagement rate αa is less than 100% and a disengaged state with an engagement rate of 0% at the predetermined cycle, the half-clutch state is prevented from continuing; thereby, while the heat generation and wear of the clutch are avoided, the low speed cruise below the minimum vehicle speed Va is made possible by partial and discontinuous transmission torque by the intermittent engagement rate αa.

The transmission torque by the intermittent engagement rate αa of the clutch 3 is given by a cycle (Ta) at which the clutch 3 is intermittently disengaged, and/or a duty ratio (a/Ta). That is, in the extremely low speed following control below the minimum vehicle speed Va at which the engine torque is decreased to the minimum, the cycle at which the clutch 3 is intermittently disengaged and/or the duty ratio is controlled so that an averaged vehicle speed becomes a target vehicle speed.

At this time, in the first embodiment shown in Figure 2, in addition to the engagement rate αa of the intermittent engaged state staying in the half-clutch region, inertial force acting on the vehicle levels the vehicle speed; so, even if an engagement time a1 corresponding to the engagement speed of the clutch 3 and a disengagement time a3 corresponding to the disengagement speed of the clutch 3 are about the same, there is almost no impact when the clutch is engaged, and the extremely low speed following cruise at an averaged vehicle speed is made possible.

On the other hand, in a second embodiment shown in Figure 3, during engagement αb of the clutch 3, the clutch 3 is put in a completely engaged state with an engagement rate of 100% not in the half-clutch region, and an effect of suppressing heat generation and wear of the clutch is further improved; in addition thereto, an engagement time b1 corresponding to the engagement speed of the clutch 3 is made longer than a disengagement time b3 corresponding to the disengagement speed of the clutch 3, and an impact at the time of engagement is reduced by loose engagement.

In the second embodiment, since torque transmission efficiency during the engagement αb of the clutch is higher than that in the first embodiment, by that amount, a time b2 of an engagement rate of 100% and a duty ratio (b/Tb) are reduced, and a rate of a clutch disengagement period b0 is increased; so, it is possible to cope with a target vehicle speed similar to that in the first embodiment.

The extremely low speed cruise control according to the first and second embodiments described above, that is, the control to intermittently (discontinuously) engage/disengage the clutch 3 in the first speed of the gear stages and at the same time, in synchronization with it, intermittently (discontinuously) make a minimum torque request to the engine 2, may be performed by preparing it as an extremely low speed cruise mode (for example, virtual 0.5-th speed) in the AMT controller 40, and when the ACC controller 10 issues a deceleration command below the minimum vehicle speed Va, shifting down to the extremely low speed cruise mode.

Alternatively, it can be configured as follows: an extremely low speed deceleration command (intermittent torque request) corresponding to the extremely low speed cruise mode is prepared in the ACC controller 10; when the target vehicle speed becomes below the minimum vehicle speed Va and the extremely low speed deceleration command (intermittent torque request) is issued, the AMT controller 40 performs intermittent clutch engagement/disengagement control, and in synchronization with it, the engine controller 20 performs intermittent throttle control corresponding to the torque request to the engine 2.

In that case, in the above intermittent torque request, since "there is a torque request" and "there is no torque request" are repeated, the engine controller 20 determines that "there is no torque request" is vehicle stop (idling) and disengages the clutch, and determines that "there is a torque request" is restart, and enters a clutch engagement operation; so, the extremely low speed cruise control can also be performed using such vehicle stop control.

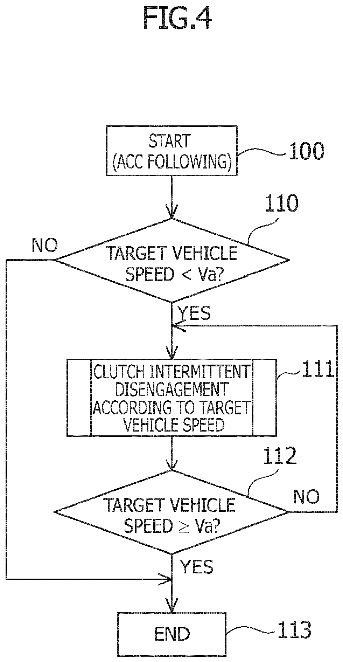

Figure 4 shows a flow of the ACC extremely low speed following control as described above. In Figure 4, in a state in which the ACC is activated while the vehicle 1 is traveling, when there is no vehicle ahead traveling below the set vehicle speed within the set inter-vehicle time in front in the vehicle's driving lane, the ACC controller 10 issues an acceleration/deceleration command so that the vehicle speed of the vehicle 1 is maintained to the set vehicle speed, the engine controller 20 performs torque control of the engine 2 on the basis of the acceleration/deceleration command, and the brake controller 30 performs brake control during deceleration.

On the other hand, when the vehicle ahead detection means 11 detects a vehicle ahead traveling below the set vehicle speed, the operation shifts to the ACC following cruise (step 100) in which: the ACC controller 10 issues an acceleration/deceleration command, setting the vehicle speed of the vehicle ahead as a target vehicle speed so as to maintain the set inter-vehicle time with the vehicle ahead; the engine controller 20 performs torque control of the engine 2 on the basis of the acceleration/deceleration command; and the brake controller 30 performs brake control during deceleration.

After the operation shifts to the ACC following cruise, when the gear stage of the vehicle 1 is shifted down to the first speed due to deceleration of the vehicle ahead, the ACC controller 10 monitors whether the target vehicle speed (vehicle speed of the vehicle ahead) of the ACC following cruise is below the minimum vehicle speed Va in the clutch engaged state (step 110). When the target vehicle speed becomes below the minimum vehicle speed Va due to congestion or the like (step 110; YES), the operation shifts to the extremely low speed following control to intermittently disengage the clutch 3 (step 111).

When the target speed becomes equal to or greater than the minimum vehicle speed Va (step 112; YES) due to acceleration of the vehicle ahead or the like during execution of the extremely low speed following control, the extremely low speed following control ends, and the operation returns to normal ACC following cruise (step 113).

When the vehicle ahead stops during the execution of the extremely low speed following control, the vehicle 1 stops while maintaining the set inter-vehicle distance, and the extremely low speed following control ends. After that, when the vehicle ahead restarts, the vehicle 1 restarts in the first speed; monitoring of whether the target vehicle speed is below the minimum vehicle speed Va is continued until the target vehicle speed becomes equal to or greater than the minimum vehicle speed Va; when the vehicle speed of the vehicle ahead stays below the minimum vehicle speed Va, the extremely low speed following control to intermittently disengage the clutch 3 is performed.

Note that the minimum vehicle speed Va in the clutch engaged state also differs depending on traveling road inclinations. If there is a significant downhill slope, the extremely low speed following cruise can be performed only by brake control. However, on an uphill road with a significant uphill slope, the minimum vehicle speed Va decreases according to the traveling road inclination. Therefore, it is preferable to dynamically set the minimum vehicle speed Va according to the traveling road inclination. On the uphill road with the significant uphill slope, it is preferable to shorten a cycle at which the clutch 3 is intermittently disengaged according to the traveling road inclination.

In the above-described embodiments, the control in the case of following the vehicle ahead at the extremely low speed below the minimum vehicle speed Va in the ACC following control has been described; however, the extremely low speed cruise control according to the present invention can be also implemented for control to generate creep torque at a time of starting on a sloping road by manual driving.

Although some embodiments of the present invention have been described above, the present invention is not limited to the above-described embodiments, and further various modifications and changes are possible on the basis of the technical idea of the present invention.

### [Reference Signs List]

1 Vehicle
2 Engine
3 Clutch
4 Automatic transmission
10 ACC controller
11 Vehicle ahead detection means
12 Tilt sensor
16, 17 Wheel speed sensor
20 Engine controller
30 Brake controller
36, 37 Brake
40 AMT controller

## Claims

1. A driving control apparatus for a vehicle, the vehicle including:
a clutch for transmitting an output of an engine to a transmission mechanism;
a clutch actuator for engaging and disengaging the clutch;
a gearshift actuator for shifting gear stages of the transmission mechanism;
an AMT controller for controlling the gearshift actuator and the clutch actuator according to a vehicle speed and an engine rotation number to perform a gear stage shifting operation of the transmission mechanism; and
an engine controller for controlling the engine according to an
acceleration/deceleration command,
the driving control apparatus having a function for issuing the
acceleration/deceleration command to perform a following cruise while maintaining a set inter-vehicle time to a vehicle ahead in a case in which the vehicle ahead traveling below a set vehicle speed is present in the vehicle's driving lane,
**characterized in that**, when a following cruise to a vehicle ahead traveling at a speed below a minimum vehicle speed at which the vehicle can travel with the clutch engaged is performed, the driving control apparatus is configured to perform control to intermittently disengage the clutch.

2. The driving control apparatus for a vehicle as claimed in claim 1, wherein the control to intermittently disengage the clutch is performed by control to repeat a half-clutch state with an engagement rate of less than 100% of the clutch and a disengaged state with an engagement rate of 0% at a predetermined cycle.

3. The driving control apparatus for a vehicle as claimed in claim 1, wherein the control to intermittently disengage the clutch is performed by control to repeat an engaged state with an engagement rate of 100% of the clutch and a disengaged state with an engagement rate of 0% at a predetermined cycle.

4. The driving control apparatus for a vehicle as claimed in claim 2 or 3, wherein in the control to intermittently disengage the clutch, an engagement speed of the clutch from the disengaged state to the half-clutch state or the engaged state is slower than a disengagement speed of the clutch to the disengaged state.

5. The driving control apparatus for a vehicle as claimed in any one of claims 1 to 4, wherein a cycle of the control to intermittently disengage the clutch is determined on the basis of the speed of the vehicle ahead and a road surface inclination.
